# EUROPÄISCHE PATENTSCHRIFT

(11) **EP 1 678 448 B1**
(45) Veröffentlichungstag und Bekanntmachung des Hinweises auf die Patenterteilung: **11.08.2010**
(21) Anmeldenummer: 04764170.9
(22) Anmeldetag: 16.08.2004
(51) Int. Cl.: F25D 29/00, B29C 65/14

(54) **BLENDE FÜR EIN GERÄTEGEHÄUSE UND VERFAHREN ZU DESSEN HERSTELLUNG**
SCREEN FOR THE HOUSING OF AN APPARATUS AND METHOD FOR THE PRODUCTION THEREOF
ECRAN POUR UN BOITIER D'APPAREIL ET PROCEDE DE FABRICATION ASSOCIE

(30) Priorität: 14.08.2003 DE 10337441
(43) Veröffentlichungstag der Anmeldung: 12.07.2006
(73) Patentinhaber: BSH Bosch und Siemens Hausgeräte GmbH, 81739 München (DE)
(72) Erfinder: RAAB, Alfred, 73460 Hüttlingen (DE); KAISER, Mario, 73550 Waldstetten (DE)
(74) Vertreter: Dosterschill, Peter
(86) Internationale Anmeldenummer: PCT/EP2004/009178
(87) Internationale Veröffentlichungsnummer: WO 2005/017429

(56) Entgegenhaltungen:
- EP-A- 0 340 958
- DE-A- 10 037 250
- DE-U- 29 513 201
- US-A1- 2002 108 707
- PATENT ABSTRACTS OF JAPAN Bd. 0100, Nr. 90 (C-337), 8. April 1986 (1986-04-08) & JP 60 223881 A (MITSUBISHI DENKI KK), 8. November 1985 (1985-11-08)

## Beschreibung

Die vorliegende Erfindung betrifft eine Blende für ein Gerätegehäuse gemäß Oberbegriff von Anspruch 1, insbesondere ein Gehäuse eines schrankähnlichen Haushaltsgeräts wie etwa eines Gefrierschranks oder eines Kühlschranks, sowie ein Verfahren zu dessen Herstellung.

Eine Blende dieser Art ist z. B. in DE 100 37 250 A1 beschrieben. Sie ist im Wesentlichen aufgebaut aus einem hohlen Trägerkörper aus Kunststoff, der vorgesehen ist, um darin eine Steuerschaltung des Geräts unterzubringen, und der mit einer frontseitigen Aussparung versehen ist, in der ein Schild oder ein Einleger eingefügt ist. Dieser Schild oder Einleger aus Kunststoff-Flachmaterial kann mit geringem Aufwand in einer Vielzahl von Varianten hergestellt werden, so dass individuelle Blenden für eine Vielzahl von unterschiedlichen Gerätemodellen durch Kombinieren unterschiedlicher Einleger mit einem gleichen Trägerkörper realisierbar sind.

Da die diversen Typen von Steuerschaltungen derartiger Gerätemodelle an unterschiedlichen Stellen Bedienelemente wie Regler und Schalter, die durch Öffnungen des Einlegers hindurch bedienbar sein sollen, und/oder Anzeigeelemente aufweist, die durch den Einleger hindurch ablesbar sein sollen, ist zwischen dem inneren Hohlraum des Trägerkörpers und der den Einleger aufnehmenden Aussparung ein großflächiges Fenster erforderlich, durch das die Bedienelemente hindurchgreifen bzw. das den Blick auf die Anzeigeelemente freigibt. Eine Verbindung zwischen dem Einleger und dem Trägerkörper ist daher notwendigerweise auf eine Randzone des Einlegers beschränkt. Herkömmlicherweise wird der Einleger an dem Trägerkörper mit Hilfe eines doppelseitigen Klebebandes befestigt.

Aufgrund eingefrorener Spannungen in Teilen der Wände des Trägerkörpers und der geringen zur Verfügung stehenden Klebefläche kann es bei erhöhten Temperaturen zu einer Ablösung des Einlegers von dem Trägerkörper kommen.

Aufgabe der vorliegenden Erfindung ist, eine Blende, ein mit einer solchen Blende ausgestattetes Gerät sowie ein Verfahren zur Herstellung der Blende anzugeben, die einfach und kostengünstig sind und eine feste, dauerhafte Verbindung zwischen dem Einleger und dem Trägerkörper gewährleisten.

Die Aufgabe wird gelöst durch eine Blende mit den Merkmalen des Anspruchs 1, ein Gerät mit den Merkmalen des Anspruchs 3 bzw. ein Verfahren mit den Merkmalen des Anspruchs 5.

Durch Infrarotbestrahlung einer vorgesehenen Verbindungszone zwischen dem Einleger und dem Trägerkörper ist eine dauerhafte Verbindung zwischen beiden, insbesondere durch Verschweißen oder durch Aktivieren einer Schicht eines zwischen Trägerkörper und Einleger lokalisierten Schicht eines wärmeaktivierbaren Klebstoffs, realisierbar.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: einer perspektivische Ansicht der Einzelteile einer erfindungsgemäßen Blende in Explosionsdarstellung;
- Fig. 2: das Verfahren zum Verbinden des Einlegers mit dem Trägerkörper; und
- Fig. 3: einen Schnitt durch die erfindungsgemäße Blende.

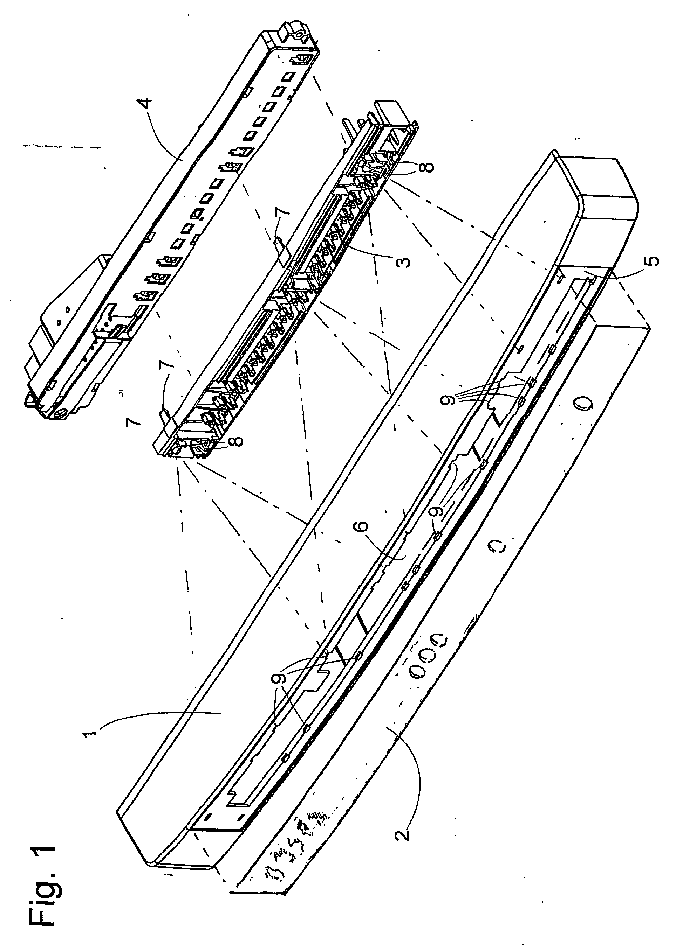

In der auseinander gezogenen Darstellung der Fig. 1 erkennt man einen Trägerkörper 1, der aus einem Kunststoff wie etwa ABS durch Spritzguss gefertigt ist, einen Einleger 2 aus einer kräftigen, steifen Kunststofffolie, einen Adapter 3 und eine Steuerschaltung 4. An einer Vorderseite des Trägerkörpers 1 ist eine Aussparung 5 gebildet, die in Form und Tiefe an den Einleger 2 angepasst ist, so dass dieser, wenn er in der Aussparung 5 montiert ist, diese komplett ausfüllt und an seinen Rändern mit dem Trägerkörper 1 bündig abschließt. Am Boden der Aussparung 5 ist ein großflächiges Fenster 6 zu einem inneren Hohlraum des Trägerkörpers 1 gebildet, der vorgesehen ist, um, durch den Adapter 3 fixiert, die Steuerschaltung 4 aufzunehmen. Der Adapter 3 weist hierfür mehrere Rasthaken 7, 8 auf, von denen die Rasthaken 7 zur Verklammerung des Adapters 3 am Gehäuse der Steuerschaltung 4 dienen und die Rasthaken 8 vorgesehen sind, um in Kerben 9 am Rand des Fensters 6 einzugreifen, die in mehreren Sätzen vorhanden sind, um die Montage des Adapters 3 am Trägerkörper 1 in einer Mehrzahl von Positionen zu ermöglichen.

Der Einleger 2 besteht im Wesentlichen aus einem infrarotdurchlässigen Kunststoffmaterial, das an seiner dem Trägerkörper 1 zugewandten Rückseite mit einer Dekorschicht, z. B. durch Siebdruck, versehen ist. Diese Dekorschicht muss nicht notwendigerweise infrarotdurchlässig sein. Das Material des Trägerkörpers 1 hingegen ist infrarotabsorbierend.

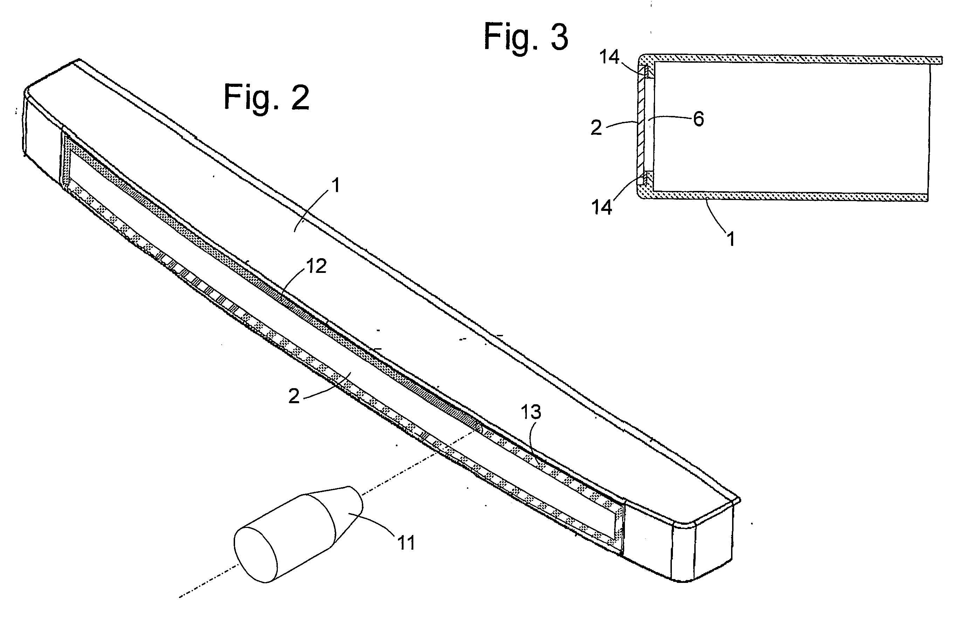

Fig. 2 veranschaulicht das Verfahren zum Verbinden von Einleger 2 und Trägerkörper 1. Es wird hierfür eine Infrarot-Strahlungsquelle 11 wie etwa eine infrarotemittierende Glühlampe oder ein IR-Laser an der Vorderseite der Blende entlang bewegt, so dass der Strahl der Infrarotquelle 11 an der Blende eine Bahn 12 rings um das (in der Figur nicht sichtbare) Fenster 6 beschreibt. Da das Material des Einlegers 2 infrarotdurchlässig ist, wird die Wärme des Infrarotstrahls im Wesentlichen in Höhe der Dekorschicht und der von ihr berührten Oberfläche des Trägerkörpers 1 frei gesetzt und verschweißt diese miteinander, wie durch eine dichte Schraffur im Bereich 13 der Bahn 12 in Fig. 2 angedeutet.

Zweckmäßigerweise sind der Einleger 2 und dessen Dekorschicht aus einem gegen höhere Temperaturen beständigen Material als der Trägerkörper 1 gefertigt, und die Leistung der Infrarotquelle ist so bemessen, dass der Trägerkörper 1 vom Infrarotstrahl oberflächlich angeschmolzen wird, nicht aber der Einleger 2 und die Dekorschicht. So ist ein ansprechendes Aussehen der fertigen Blende sichergestellt.

Einer zweiten Ausgestaltung der Erfindung zufolge wird der Einleger 2 an seiner Rückseite vor dem Einfügen in die Aussparung 5 des Trägerkörpers 1 mit einer Schicht eines wärmeaktivierbaren Klebstoffs versehen. Vorzugsweise ist die Schicht nur in einem Randbereich des Einlegers 2 angebracht, so dass sie sich mit dem Fenster 6 nicht überschneidet. Durch Bestrahlen mit der Infrarotquelle 11 wird der Kleber aktiviert und erzeugt eine dauerhafte Verbindung zwischen dem Trägerkörper 1 und dem Einleger 2 auf deren gesamter Kontaktfläche. Fig. 3 zeigt einen schematischen Schnitt durch eine auf diese Weise hergestellte Blende, wobei die (übertrieben dick dargestellte) Klebstoffschicht mit 14 bezeichnet ist.

Die Aktivierungstemperatur des Klebstoffs liegt deutlich unterhalb der Schmelztemperatur des Materials des Trägerkörpers 1 bzw. des Einlegers 2, so dass ein Anschmelzen des einen oder des anderen bei der Fixierung des Einlegers 2 vermieden werden kann. So wird zum einen der Energiebedarf des Verfahrens gegenüber dem zuvor betrachteten Fall des Infrarot-Schweißens verringert, zum anderen besteht keine Gefahr, dass die Fixierung von außen sichtbare Veränderungen am Einleger 2 verursacht, die dessen ansprechendes Aussehen beeinträchtigen und ihn somit unbrauchbar machen können.

## Patentansprüche

1. Blende für ein Gerätegehäuse, mit einem mit einer Aussparung (5) versehenen Trägerkörper (1) und einem in die Aussparung (5) eingefügten Einleger (2), **dadurch gekennzeichnet, dass** der Einleger im Wesentlichen aus einem infrarotdurchlässigen Kunststoffmaterial besteht und dass der Einleger (2) in der Aussparung (5) durch Verschweißen oder durch Aktiveren einer zwischen dem Trägerkörper (1) und dem Einleger (2) lokalisierten Schicht eines wärmeaktivierbaren Klebstoffs durch Infrarotstrahlung fixiert ist.

2. Blende nach Anspruch 1, **dadurch gekennzeichnet, dass** eine Verbindung zwischen dem Einleger (2) und dem Trägerkörper (1) auf eine Randzone (12, 13) des Einlegers (2) beschränkt ist.

3. Gerät mit einer Blende nach einem der vorhergehenden Ansprüche, **dadurch gekennzeichnet, dass** eine Steuerschaltung (4) des Geräts in dem hohlen Trägerkörper (1) untergebracht ist.

4. Gerät nach Anspruch 3, **dadurch gekennzeichnet, dass** die Steuerschaltung (4) wenigstens ein visuelles Anzeigeelement aufweist, und dass der Einleger (2) wenigstens in der Umgebung des Anzeigeelements lichtdurchlässig ist.

5. Verfahren zum Herstellen einer Blende für ein Gerätegehäuse, nach einem der Ansprüche 1 oder 2, mit den Schritten
a) Bereitstellen eines Trägerkörpers (1) mit einer Aussparung (5) und eines Einlegers (2);
b) Einfügen des Einlegers (2) in die Aussparung (5);
c) Infrarotbestrahlen einer vorgesehenen Verbindungszone (12, 13) zwischen dem Einleger (2) und dem Trägerkörper (1).

6. Verfahren nach Anspruch 5, **dadurch gekennzeichnet, dass** die Verbindungszone (12, 13) sich entlang einer Randzone des Einlegers (2) erstreckt und dass die Randzone mit einem Infrarotstrahler (11) sukzessive abgefahren wird.

7. Verfahren nach Anspruch 6, **dadurch gekennzeichnet, dass** durch das Abfahren mit dem Infrarotstrahler (11) eine Schicht eines wärmeaktivierbaren Klebstoffs (14) zwischen dem Einleger (2) und dem Trägerkörper (1) aktiviert wird.

## Claims

1. Screen for an apparatus housing, with a carrier body (1) provided with a cut-out (5) and an insert (2) inserted into the cut-out (5), **characterised in that** the insert consists substantially of an infrared-permeable plastics material and that the insert (2) is fixed in the cut-out (5) by welding or by activation by infrared radiation of a layer of heat-activatable adhesive localised between the carrier body (1) and the insert (2).

2. Screen according to claim 1, **characterised in that** a connection between the insert (2) and the carrier body (1) is confined to an edge zone (12, 13) of the insert (2).

3. Apparatus with a screen according to any one of the preceding claims, **characterised in that** a control circuit (4) of the apparatus is accommodated in the hollow carrier body (1).

4. Apparatus according to claim 3, **characterised in that** the control circuit (4) comprises at least one visual indicator element and that the insert (2) is light-permeable at least in the environment of the indicator element.

5. Method of producing a screen for an apparatus housing according to one of the claims 1 and 2, comprising the steps:
a) providing a carrier body (1) with a cut-out (5) and an insert (2);
b) inserting the insert (2) in the cut-out (5); and
c) infrared-radiation of an intended connecting zone (12, 13) between the insert (2) and the carrier body (1).

6. Method according to claim 5, **characterised in that** the connecting zone (12, 13) extends along an edge zone of the insert (2) and that the edge zone is successively traversed by an infrared radiator (11).

7. Method according to claim 6, **characterised in that** a layer of heat-activatable adhesive (14) between the insert (2) and the carrier body (1) is activated by the traversing with the infrared radiator (11).

## Revendications

1. Cache pour un boîtier d'appareil, comprenant un corps porteur (1) muni d'un évidement (5) et un insert (2) inséré dans l'évidement (5), **caractérisé en ce que** l'insert est essentiellement constitué d'un matériau plastique transparent aux infrarouges et **en ce que** l'insert (2) est fixé dans l'évidement (5) par soudure ou par activation par rayonnement infrarouge d'une couche, localisée entre le corps porteur (1) et l'insert (2), d'une colle activable à la chaleur.

2. Cache selon la revendication 1, **caractérisé en ce qu'**un raccordement entre l'insert (2) et le corps porteur (1) est limité à une zone de bord (12, 13) de l'insert (2).

3. Appareil muni d'un cache selon l'une quelconque des revendications précédentes, **caractérisé en ce qu'**un circuit de commande (4) de l'appareil est logé dans le corps porteur creux (1).

4. Appareil selon la revendication 3, **caractérisé en ce que** le circuit de commande (4) présente au moins un élément d'affichage visuel et **en ce que** l'insert (2) est transparent à la lumière au moins dans les environs de l'élément d'affichage.

5. Procédé de fabrication d'un cache pour un boîtier d'appareil selon l'une quelconque des revendications 1 ou 2, comprenant les étapes
a) fourniture d'un corps porteur (1) muni d'un évidement (6) et d'un insert (2) ;
b) insertion de l'insert (2) dans l'évidement (5) ;
c) rayonnement infrarouge d'une zone de raccordement ménagée (12, 13) entre l'insert (2) et le corps porteur (1).

6. Procédé selon la revendication 5, **caractérisé en ce que** la zone de raccordement (12, 13) s'étend le long d'une zone de bord de l'insert (2) et **en ce que** la zone de bord est parcourue de manière successive au moyen d'un émetteur de rayonnement infrarouge (11).

7. Procédé selon la revendication 6, **caractérisé en ce qu'**en raison du parcours au moyen de l'émetteur de rayonnement infrarouge (11), une couche d'une colle activable à la chaleur (14) est activée entre l'insert (2) et le corps porteur (1).
